(19) Europäisches Patentamt / European Patent Office / Office européen des brevets

(11) **EP 4 054 864 B1**

(12) **FASCICULE DE BREVET EUROPEEN**

(45) Date de publication et mention de la délivrance du brevet:
**13.09.2023 Bulletin 2023/37**

(21) Numéro de dépôt: **20819814.3**

(22) Date de dépôt: **06.11.2020**

(51) Classification Internationale des Brevets (IPC):
**B60C 11/03** (2006.01)     **B60C 11/12** (2006.01)

(52) Classification Coopérative des Brevets (CPC):
**B60C 11/0302; B60C 11/0318; B60C 11/033; B60C 11/12; B60C 11/1392;** B60C 2011/0313; B60C 2011/129

(86) Numéro de dépôt international:
**PCT/FR2020/052027**

(87) Numéro de publication internationale:
**WO 2021/089965 (14.05.2021 Gazette 2021/19)**

(54) **PNEUMATIQUE COMPORTANT UNE BANDE DE ROULEMENT**

REIFEN MIT EINER LAUFFLÄCHE

TIRE COMPRISING A TREAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.11.2019 FR 1912451**

(43) Date de publication de la demande:
**14.09.2022 Bulletin 2022/37**

(73) Titulaire: **COMPAGNIE GENERALE DES ETABLISSEMENTS MICHELIN**
**63000 Clermont-Ferrand (FR)**

(72) Inventeurs:
• **BOISDON, Bertrand**
**63040 CLERMONT-FERRAND Cedex 9 (FR)**

• **LABROUSSE, Jerome**
**63040 CLERMONT-FERRAND Cedex 9 (FR)**
• **VANTAL, Marie-Hélène**
**63040 CLERMONT-FERRAND Cedex 9 (FR)**

(74) Mandataire: **Le Cam, Stéphane Georges Elie**
**Manufacture Française des Pneumatiques Michelin**
**DCJ/PI - F35 - Ladoux**
**23, place des Carmes-Déchaux**
**63040 Clermont-Ferrand Cedex 9 (FR)**

(56) Documents cités:
**EP-A1- 3 261 856        CN-A- 110 239 285**
**DE-A1-102017 203 221    US-A- D 758 286**
**US-A- D 818 939         US-A- D 825 445**
**US-A- D 864 845**

## Description

### Domaine technique

La présente invention concerne un pneumatique pour véhicule automobile dit pneumatique « quatre saisons ». L'invention est plus particulièrement adaptée pour un pneumatique destiné à équiper un véhicule de tourisme ou une camionnette.

### Technique antérieure

De manière connue, un pneumatique dit quatre saisons est un pneumatique qui présente un excellent compromis d'adhérence sur sol enneigé/sol mouillé tout en préservant les performances sur sol sec. Ces pneumatiques ont pour objectif de rouler en sécurité toute l'année quelle que soit la météo. Ils ont généralement reçu la certification hiver 3PMSF (pour 3 Peak Mountain Snow Flake) attestant de leurs excellentes performances sur sol enneigé et sur sol mouillé. Cette certification est notamment indiquée sur l'un ou les deux flancs de ces types de pneumatiques.

Le document WO2016/134988 divulgue un pneumatique quatre saisons présentant une bande de roulement comportant deux bords et un centre. Ladite bande de roulement est directionnelle et elle comporte une pluralité de blocs en matériau caoutchoutique. Plus particulièrement, chaque bloc de la pluralité de blocs présente une zone centrale s'étendant globalement selon un angle $\beta 1$, ledit angle $\beta 1$ étant au moins supérieur à 35 degrés et au plus inférieur à 65 degrés avec une direction axiale. Chaque bloc de la pluralité de blocs comporte également une zone de bord s'étendant globalement selon un angle $\beta 3$ au moins supérieur à 0 degré et au plus inférieur à 10 degrés avec ladite direction axiale. Enfin, chaque bloc de la pluralité de blocs comporte une zone intermédiaire entre la zone centrale et la zone de bord du bloc, ladite zone intermédiaire faisant un angle $\beta 2$ avec ladite direction axiale.

Le document US D818939S divulgue également un pneumatique tel que décrit précédemment, mais ne pas ne traite pas le compromis de performances d'adhérence par l'entaillement de la sculpture du pneumatique.

Il existe un besoin constant d'améliorer les performances des pneumatiques quatre saisons tant sur le compromis d'adhérence entre un sol enneigé et un sol mouillé que pour l'adhérence sur sol sec et plus particulièrement l'adhérence en freinage sur sol sec.

### Exposé de l'invention

La présente invention vise à remédier au moins en partie à ce besoin.

Plus particulièrement, la présente invention vise à améliorer le compromis d'adhérence sur sol enneigé/sol mouillé pour un pneumatique quatre saisons tout en améliorant les performances d'adhérence sur sol sec.

L'invention concerne un pneumatique comportant une bande de roulement.

Par « pneumatique », on entend tous les types de bandage en matériau caoutchoutique soumis en roulage à une pression interne ou non soumis à une telle pression interne en roulage (c'est le cas d'un bandage sans air comprimé, par exemple, de type Tweel™).

Plus particulièrement, l'invention concerne un pneumatique comportant une bande de roulement directionnelle de largeur W. Cette bande de roulement a un certain volume total VT et une pluralité d'entailles définissant un volume d'entailles VE dans ladite bande de roulement. Le rapport entre le volume d'entailles VE sur le volume total VT détermine un taux d'entaillement volumique TEV tel que TEV=VE/VT. Une partie de la pluralité des entailles délimitent des blocs en matériau caoutchoutique. Ces blocs sont organisés dans des motifs de blocs de pas P qui se succèdent selon la direction circonférentielle. Le pas P n'est pas forcément constant et il peut prendre des valeurs différentes dans la circonférence du pneumatique. Une partie de la pluralité des entailles forme une ou plusieurs incisions dans un des motifs selon une densité d'incision SD. Cette densité d'incision SD correspond au rapport entre une somme de la/des longueur(s) projetée(s) de la/des incision(s) selon une direction axiale sur le produit du pas P du motif et de la largeur

$$SD = \frac{\sum_{i=1}^{n} lpyi}{P*W} * 1000$$

W de la bande de roulement, l'ensemble étant multiplié par 1000 tel que avec n le nombre d'incisions dans le motif de pas P et lpyi la longueur projetée de la ième incision, i variant de 1 à n. Pour la bande de roulement à l'état neuf, la densité d'incision SD dans un motif de pas P est comprise entre 10 mm$^{-1}$ et 70 mm$^{-1}$. La bande de roulement forme une aire de contact AC avec le sol. Les blocs de la bande de roulement contenus dans l'aire de contact AC forme une surface de contact SC. Le rapport entre la différence entre ladite aire de contact AC et la surface de contact SC et ladite aire de contact AC détermine un taux d'entaillement surfacique TES de la bande de roulement, avec TES=(AC-SC)/AC. Le rapport TES/TEV entre le taux d'entaillement surfacique TES sur le taux d'entaillement volumique TEV est au moins égal à 1,5 et au plus égal à 1,9.

La combinaison de ces caractéristiques permet d'obtenir un pneumatique présentant un excellent compromis d'adhérence entre un sol enneigé et un sol mouillé tout en améliorant les performances d'adhérence sur un sol sec.

Préférentiellement, pour une bande de roulement à l'état neuf, le taux d'entaillement volumique TEV est au moins égal à 0,24 et au plus égal à 0,35.

Préférentiellement, le taux d'entaillement volumique TEV est au moins égal à 0,26 et au plus égal à 0,32.

Dans un mode de réalisation préférentiel, pour la bande de roulement à l'état neuf, le taux d'entaillement surfacique TES est au moins égal à 0,40 et au plus égal à 0,70.

Préférentiellement, le taux d'entaillement surfacique TES est supérieur ou égal à 0,45.

Préférentiellement, le taux d'entaillement surfacique TES est supérieur ou égal à 0,50 et plus préférentiellement supérieur ou égal à 0,55.

Dans un mode de réalisation préférentiel, Dans une variante de réalisation, la bande de roulement comprend différents types de motifs Mj, avec j supérieur ou égal à 2, les motifs appartenant à un même type de motif ayant un même pas, les pas entre des motifs appartenant respectivement à deux types de motifs différents étant différents, et en ce que la densité moyenne d'incision SDmoy sur toute la circonférence du pneumatique est au moins égale à 10 mm$^{-1}$ et au plus égale à 70 mm$^{-1}$, ladite densité moyenne d'incisions SDmoy correspondant à la moyenne des densités d'incisions SDj des motifs des différents types de motifs Mj de pas Pj sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que

$$\text{SDmoy} = \frac{\sum_{j=1}^{m}(SDj*Nj*Pj)}{\sum_{j=1}^{m}(Nj*Pj)}$$

avec m le nombre de types de motifs différents, SDj la densité d'incisions dans un motif appartenant au type de motif Mj, Pj le pas des motifs appartenant au type de motif Mj, Nj le nombre de motifs appartenant au type de motif Mj, ladite bande de roulement étant à l'état neuf.

Préférentiellement, la densité d'incision SD ou la densité moyenne d'incision SDmoy est au moins égale à 25 mm$^{-1}$.

Préférentiellement, la densité d'incision SD ou la densité moyenne d'incision SDmoy est au moins égale à 30 mm$^{-1}$.

Préférentiellement, la densité d'incision SD ou la densité moyenne d'incision SDmoy est au moins égale à 35 mm$^{-1}$.

Préférentiellement, la densité d'incision SD ou la densité moyenne d'incision SDmoy est au moins égale à 40 mm$^{-1}$.

Préférentiellement, la densité d'incision SD ou la densité moyenne d'incision SDmoy est au moins égale à 45 mm$^{-1}$.

Préférentiellement, la densité d'incision SD ou la densité moyenne d'incision SDmoy est au plus égale à 60 mm$^{-1}$.

Préférentiellement, la densité d'incision SD ou la densité moyenne d'incision SDmoy est au plus égale à 50 mm$^{-1}$.

Dans un mode de réalisation préférentiel, dans la bande de roulement à l'état neuf, les blocs ont une hauteur maximale au moins égale à 5,5 mm et au plus égale à 9 mm, et de préférence au plus égale à 7,5 mm. En diminuant la hauteur radiale du bloc, on améliore globalement la résistance au roulement du pneumatique ainsi que le comportement routier sur sol sec.

Les blocs sont en matériau caoutchoutique.

Par « matériau caoutchoutique », on entend un matériau polymérique de type mélange élastomérique, c'est-à-dire un matériau polymérique obtenu par mélangeage d'au moins un élastomère, d'au moins une charge renforçante et d'un système de réticulation.

Une caractéristique physique usuelle d'un mélange élastomérique est sa température de transition vitreuse Tg, température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est-à-dire cuit jusqu'à un taux de conversion d'au moins 90%, l'échantillon ayant la forme d'une éprouvette cylindrique ayant une épaisseur égale à 2 mm et une section égale à 78,5 mm$^2$. On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", et la perte dynamique tg$\delta$, égale au rapport G"/G'. La température de transition vitreuse Tg est la température à laquelle la perte dynamique tg$\delta$ atteint un maximum lors du balayage en température. La valeur de G* mesurée à 60°C est représentative de la rigidité du matériau caoutchoutique, c'est-à-dire de sa résistance à la déformation élastique.

Dans un mode de réalisation préférentiel, la composition du matériau caoutchoutique des blocs du motif a une température de transition vitreuse Tg comprise entre -40°C et -10°C et préférentiellement entre -35°C et -15°C. De plus la composition du matériau caoutchoutique a un module de cisaillement dynamique mesuré à 60°C comprise entre 0,5 MPa et 2 Mpa, et préférentiellement entre 0,7 Mpa et 1,5 Mpa.

Au niveau de la composition chimique, le mélange élastomérique du ou des blocs selon l'invention comprend 100 pce (parties pour cent élastomère) d'une matrice élastomère comprenant un élastomère diénique modifié. Par définition, un élastomère diénique est un homopolymère ou un copolymère, issu aux moins en partie des monomères diènes, c'est-à-dire des monomères porteurs de deux doubles liaisons carbone-carbone conjuguées ou non. Préférentiellement, le mélange élastomérique comprend l'élastomère diénique modifié à un taux au moins égal à 20 pce.

L'élastomère diénique modifié selon l'invention comprend au moins un groupe fonctionnel comprenant un atome de silicium, ce dernier se situant au sein de la chaîne principale, y compris les extrémités de chaîne. L'expression « atome se situant au sein de la chaîne principale de l'élastomère, y compris les extrémités de chaîne », s'entend ici comme n'étant pas un atome pendant (ou latéral) le long de la chaîne principale de l'élastomère mais étant un atome intégré à la chaîne principale. Dans un mode de réalisation préférentiel, la composition du bloc comprend un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

Préférentiellement, l'élastomère diénique modifié comprend un groupe fonctionnel comprenant un atome de silicium en une extrémité de la chaîne principale de l'élastomère.

Préférentiellement, le groupe fonctionnel comprend une fonction silanol. En variante, l'atome de silicium du groupe fonctionnel est substitué par au moins une fonction alcoxy, éventuellement totalement ou partiellement hydrolysée en hydroxyle.

Dans une variante de réalisation, le groupe fonctionnel se situe dans la chaîne élastomère principale, on dira alors que l'élastomère diénique est couplé ou encore fonctionnalisé en milieu de chaîne. L'atome de silicium du groupe fonctionnel lie alors les deux branches de la chaîne principale de l'élastomère diénique. L'atome de silicium du groupe fonctionnel est substitué par au moins une fonction alcoxy, éventuellement totalement ou partiellement hydrolysée en hydroxyle.

Selon les variantes de l'invention selon lesquelles le groupe fonctionnel comprend une fonction silanol en extrémité de chaîne, le groupement fonctionnel peut être une fonction silanol ou encore un groupement polysiloxane ayant une extrémité silanol. Des élastomères diéniques modifiés correspondant sont décrits notamment dans les documents EP 0 778 311 A1, WO 2011/042507 A1.

Selon l'une quelconque des variantes de l'invention selon lesquelles l'atome de silicium du groupe fonctionnel est substitué par au moins une fonction alcoxy, éventuellement totalement ou partielle hydrolysée en hydroxyle, l'atome de silicium peut également être substitué, directement ou par l'intermédiaire d'un radical hydrocarboné divalent, par au moins une autre fonction comprenant au moins un hétéroatome choisi parmi N, S, O, P. De préférence, l'atome de silicium est substitué par au moins une autre fonction par l'intermédiaire d'un radical hydrocarboné divalent, plus préférentiellement aliphatique linéaire en C1- C18. On peut, à titre d'exemple, citer parmi ces autres fonctions, les amines primaires, secondaires ou tertiaires, cycliques ou non, les isocyanates, les imines, les cyano, les thiols, les carboxylates, les époxydes, les phosphines primaires, secondaires ou tertiaires. L'autre fonction est de préférence une amine tertiaire, plus préférentiellement un groupement diéthylamino- ou diméthylamino-. La fonction alcoxy est de préférence méthoxy, éthoxy, butoxy ou propoxy. Des élastomères diéniques modifiés correspondant à ces variantes sont décrits notamment dans les documents WO 2009/133068 A1, WO 2015/018743 A1.

La modification de l'élastomère diénique par au moins un groupe fonctionnel comprenant un atome de silicium, n'exclut pas une autre modification de l'élastomère par exemple en extrémité de chaîne par une fonction amine introduite lors de l'initiation de la polymérisation, tel que décrit dans WO 2015/018774 A1, WO 2015/018772 A1.

Préférentiellement, l'élastomère diénique modifié selon l'invention est un polymère de 1,3-butadiène, plus préférentiellement un copolymère de 1,3-butadiène et de styrène (SBR).

L'élastomère diénique modifié selon l'invention peut être, selon différentes variantes, utilisé seul dans le mélange élastomérique ou en coupage avec au moins un autre élastomère diénique conventionnellement utilisé en pneumatique, qu'il soit étoilé, couplé, fonctionnalisé par exemple à l'étain ou au silicium, ou non.

Egalement du point de vue de sa composition chimique, le mélange élastomérique de la bande de roulement selon l'invention comprend une résine plastifiante de type résine thermoplastique à un taux au moins égal à 20 pce.

Dans une variante de réalisation de l'invention, le pneumatique a une certification hiver 3PMSF, ladite certification étant indiquée sur un flanc du pneumatique.

La présente invention sera mieux comprise à la lecture de la description détaillée de modes de réalisation pris à titre d'exemples nullement limitatifs et illustrés par les dessins annexés sur lesquels :

La figure 1 est une vue schématique en perspective d'un pneumatique selon l'art antérieur ;

La figure 2 est vue schématique en perspective d'une coupe partielle d'un pneumatique selon un autre art antérieur ;

La figure 3 est une vue en coupe de la bande de roulement du pneumatique de la figure 2 ;

La figure 4 est une vue de détail partielle d'une bande de roulement à l'état neuf d'un pneumatique conforme à un premier mode de réalisation de l'invention ;

La figure 5 est une vue agrandie d'un bloc de la bande de roulement de la figure 4 ;

La figure 6 est une vue en coupe selon un plan de coupe A-A du bloc de la figure 5 ;

La figure 7 est une vue schématique d'une aire de contact de la bande de roulement à l'état neuf du pneumatique de la figure 4 ;

La figure 8 est une vue schématique d'une aire de contact de la bande de roulement à l'état usé du pneumatique de la figure 4 ;

La figure 9 est une partie de l'aire de contact de la figure 7 centrée sur un motif de la bande de roulement ;

La figure 10 est une vue agrandie d'un ensemble de blocs appartenant à un motif de pas P1 d'une bande de roulement d'un pneumatique conforme à un second mode de réalisation de l'invention ;

La figure 11 est une vue agrandie d'un ensemble de blocs appartenant à un motif de pas P2 d'une bande de roulement d'un pneumatique conforme au second mode de réalisation de l'invention ;

La figure 12 est une vue agrandie d'un ensemble de blocs appartenant à un motif de pas P3 d'une bande de roulement d'un pneumatique conforme au second mode de réalisation de l'invention.

L'invention n'est pas limitée aux modes de réalisation et variantes présentées et d'autres modes de réalisation et variantes apparaîtront clairement à l'homme du métier sans sortir du cadre défini par les revendications ci-jointes.

Sur les différentes figures, les éléments identiques ou similaires portent les mêmes références. C'est ainsi que les références utilisées pour identifier des éléments sur la bande de roulement sont reprises pour identifier ces mêmes éléments sur l'aire de contact réalisée à partir de ladite bande de roulement.

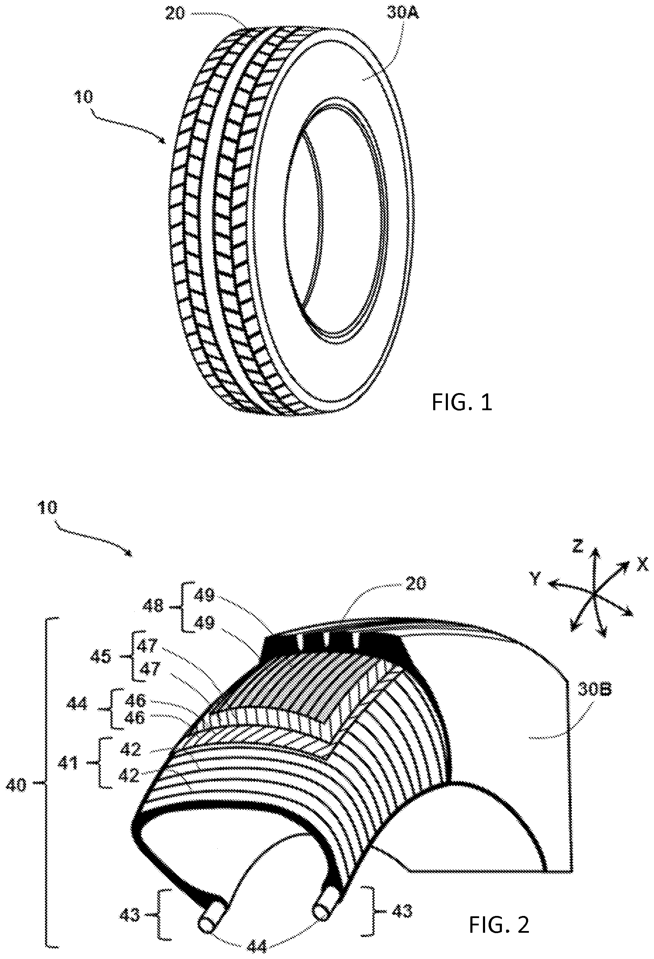

La figure 1 représente schématiquement un pneumatique 10 selon l'art antérieur. Ce pneumatique 10 comporte une bande de roulement 20 et deux flancs 30A, 30B (dont un seul est ici représenté), ladite bande de roulement 20 et lesdits flancs 30A, 30B recouvrant une carcasse 40 (non représentée sur la figure 1). La figure 2 détaille plus particulièrement la carcasse 40 d'un pneumatique 10 conforme à l'art antérieur. Cette carcasse 40 comprend ainsi une armature de carcasse 41 constituée de fils enrobés 42 de composition caoutchouteuse, et deux bourrelets 43 comportant chacun des armatures de renforcement circonférentielles 44 (ici, des tringles) qui maintiennent le pneumatique 10 sur une jante (non représentée). L'armature de carcasse 41 est ancrée dans chacun des bourrelets 43. La carcasse 40 comporte en outre une armature de sommet comprenant deux nappes de travail 44 et 45. Chacune des nappes de travail 44 et 45 est renforcée par des éléments de renforcement 46 et 47 filaires qui sont parallèles dans chaque couche et croisés d'une couche à l'autre, en faisant avec la direction circonférentielle X des angles compris entre 10° et 70°.

Par « direction circonférentielle », on entend une direction qui est tangente à tout cercle centré sur l'axe de rotation. Cette direction est perpendiculaire à la fois à une direction axiale et à une direction radiale.

Par « direction radiale », on entend une direction qui est perpendiculaire à l'axe de rotation du pneumatique (cette direction correspond à la direction de l'épaisseur de la bande de roulement au centre de ladite bande de roulement).

Par « direction axiale », on entend une direction parallèle à l'axe de rotation du pneumatique.

Le pneumatique comporte en outre une armature de frettage 48, disposée radialement à l'extérieur de l'armature de sommet. Cette armature de frettage 48 est formée d'éléments de renforcement 49 orientés circonférentiellement et enroulés en spirale. Le pneumatique 10 représenté sur la figure 2 est un pneu « tubeless ». Il comprend une gomme intérieure en composition caoutchouteuse imperméable au gaz de gonflage et recouvrant la surface intérieure du pneumatique.

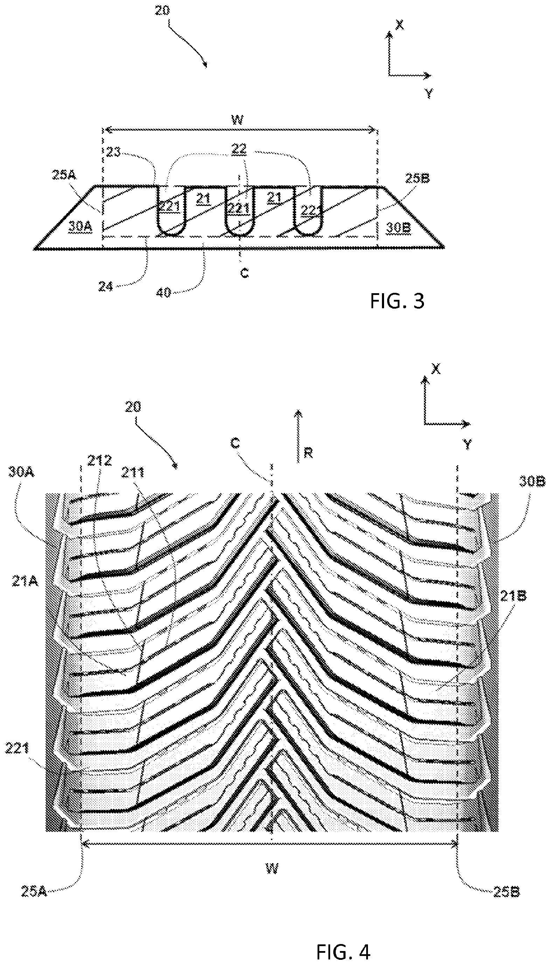

La figure 3 est une vue détaillée en coupe de la bande de roulement 20 de la figure 2. La bande de roulement assure le contact du pneumatique 10 avec la route. Elle comprend pour cela des blocs 21 en matériau caoutchoutique et des entailles 22 délimitant lesdits blocs 21. Les blocs 21 constituent la partie pleine de la bande de roulement 20 et les entailles 22 constituent la partie creuse de cette même bande de roulement 20.

Par « entaille », on entend différents types de découpures, par exemple des rainures, des incisions ou toutes autres découpures.

Par « rainure », on entend une entaille dont la distance entre les parois de matière qui la délimitent est supérieure à 2 mm et dont la profondeur est supérieure ou égale à 1 mm.

Par « incision », on entend une entaille dont la distance entre les parois de matière qui la délimitent est inférieure ou égale à 2 mm et dont la profondeur est supérieure ou égale à 1 mm.

Les autres types de découpures peuvent comprendre, par exemple, des « grains d'orge », c'est à dire des entailles dont la profondeur est inférieure à 1 mm.

Par « bloc », on entend un élément en relief délimité par des rainures et comprenant des parois latérales et une face de contact, cette dernière étant destinée à venir en contact avec un sol pendant le roulage.

Par « surface de roulement » 23 de bande de roulement 20, on entend la surface qui regroupe l'ensemble des points du pneumatique qui vont entrer en contact avec un sol dans des conditions usuelles de roulage. Ces points qui vont entrer en contact avec le sol appartiennent aux faces de contact des blocs 21. Sur la figure 3, la surface de roulement 23 est volontairement prolongée au-dessus des entailles 22 pour s'assurer de sa continuité entre les deux bords 25A et 25B. Pour un pneumatique, les « conditions usuelles » de roulage sont les conditions d'utilisation définies par la norme ETRTO (European Tyre and Rim Technical Organisation). Ces conditions d'utilisation précisent la pression de gonflage de référence correspondant à la capacité de charge du pneu indiquée par son indice de charge et à son code vitesse. Ces conditions d'utilisation peuvent aussi être dites « conditions nominales » ou « conditions d'usage ».

Par « surface de fond » 24, on entend une surface théorique qui passe par les points radialement intérieurs des rainures 221 de la bande de roulement 20. Elle délimite ainsi la frontière entre la bande de roulement 20 et la carcasse 40 du pneumatique. Cette surface de fond 24 s'étend entre un premier bord 25A et un second bord 25B de la bande de roulement 20.

Par « bord » 25A, 25B de la bande de roulement 20 on entend les surfaces délimitant les frontières entre la bande de roulement 20 et les flancs 30. Ces deux bords 25A, 25B s'étendent radialement et ils sont distants entre eux d'une valeur W correspondant à la largeur de la bande de roulement 20. Ces deux bords 25A, 25B sont situés à une même distance par rapport à un axe central C. Cet axe central C divise la bande de roulement 20 en deux demi-bandes de roulement.

La bande de roulement 20 de la figure 3 comprend ici trois rainures 221. Ces rainures 221 s'étendent circonférentiellement dans la bande de roulement en formant un volume d'entailles VE.

La bande de roulement 20 est délimitée par une surface de roulement 23, une surface de fond 24 et un premier bord 25A et un second bord 25B. Le volume total VT de cette bande de roulement correspond au volume qu'occuperait un matériau caoutchoutique entre ces différentes limites (la surface de roulement 23, la surface de fond 24, les bords 25A, 25B) dans le cas théorique où cette bande de roulement ne comprendrait aucune entaille. Ainsi, on a la relation suivante VT= VE+VC, avec VC le volume de caoutchouc contenu réellement dans la bande de roulement.

Un moyen de déterminer le volume total VT de la bande de roulement serait de calculer une surface totale ST de cette bande dans un plan radian ou méridien et de la multiplier par le périmètre du pneumatique. Une telle surface totale ST est notamment représentée en hachures sur la figure 3. Cette surface totale ST est donc délimitée par la surface de roulement 23, la surface de fond 24 et un premier bord 25A et un second bord 25B.

On connaît des systèmes pour obtenir des données de surface de la bande de roulement afin de déterminer la carte de cette surface de bande de roulement. Par exemple, des systèmes de cartographie laser ont été utilisés pour obtenir des points de mesure de données de points d'une surface d'un pneumatique. Un tel procédé est notamment décrit dans les documents WO2015016888 et EP2914946. Les systèmes de cartographie laser comprennent typiquement une sonde laser utilisé pour mesurer la distance de la sonde à la surface de bande de roulement du pneumatique pour chaque point le long de la surface du pneumatique. Cette sonde laser peut-être un quelconque dispositif approprié pour acquérir des données associées à la bande de roulement (par exemple la hauteur de cette bande de roulement) utilisant un laser, tel qu'une sonde laser utilisée dans une machine de mesure TMM-570 de la société WOLF & BECK. Il est alors possible de simuler numériquement les contours de la surface de roulement 23 et de la surface de fond 24 par un balayage laser. Ainsi, la surface de roulement 23 est obtenue à partir de points mesurés sur les faces de contact des blocs. La surface de fond 24 est obtenue à partir de points mesurés dans le fond des rainures 221. Le premier bord 25A et le second bord 25B sont obtenus par la connaissance de la largeur W de la bande de roulement. Cette largeur W peut être obtenue en réalisant une empreinte encrée de la bande de roulement dans les conditions usuelles de roulage. La simulation de la surface de roulement 23, de la surface de fond 24 et la détermination des bords 25A, 25B permettent de calculer la surface totale ST de la bande de roulement. Ladite surface ST est présentée avec des hachures sur la figure 3.

Le périmètre du pneumatique est obtenu en multipliant un rayon moyen de courbure Rc dans le plan circonférentiel médian ou plan équatorial de ce pneumatique par $2*\pi$. Le rayon moyen de courbure Rc est le rayon qui a pour origine l'axe de rotation du pneumatique et qui passe par le milieu de la surface de la bande de roulement. A partir de la surface totale ST et du périmètre du pneumatique, il est alors possible de déduire le volume total VT de la bande de roulement.

Le taux d'entaillement volumique TEV correspond au rapport du volume d'entaille VE sur le volume total VT, tel que TEV=VE/VT. Or étant donné que VE= VT-VC, on peut déduire la relation TEV=1-VC/VT. Le volume de gomme VC contenu dans la bande de roulement peut être déterminé de la manière suivante :

- on pèse le pneumatique à l'état neuf ;

- on vient ensuite raboter ce pneumatique jusqu'à atteindre l'usure maximale, c'est-à-dire jusqu'à atteindre la surface de fond 24 ;

- on pèse le pneumatique raboté ;

- la différence de masse entre le pneumatique à l'état neuf et le pneumatique à l'état usé donne la masse de matériau caoutchoutique réellement contenue dans la bande de roulement ;

- on détermine le volume de gomme VC à partir de la masse de matériau caoutchoutique contenue dans la bande de roulement et de la masse volumique de ce matériau caoutchoutique.

Le volume de gomme VC et le volume total VT permettent de déterminer le taux d'entaillement volumique TEV.
Une autre méthode pour déterminer un taux d'entaillement volumique TEV serait d'utiliser pleinement les possibilités des moyens de mesure par laser tels que ceux divulgués dans le document FR2996640. Ces moyens de mesure comprennent un faisceau ayant un axe dirigé tangentiellement à la surface de la zone centrale de la bande de roulement du pneumatique et/ou à la surface d'au moins une zone latérale de cette bande de roulement. A partir de ces moyens de mesure, on réalise différents profils extérieurs sur toute la circonférence du pneumatique. La superposition de ces profils extérieurs sur un même méridien permet de déterminer un profil sommet et un profil fond. Il est alors possible de construire une surface totale limitée par le profil sommet et le profil fond ainsi que par des plans délimitant la bande de roulement. Ces plans délimitant la bande de roulement sont des plans normaux au profil sommet déterminant la largeur de la bande de roulement en contact avec le sol dans des conditions de charge et de pression nominales conformément à l'ETRTO. Pour chaque profil extérieur obtenu par balayage laser, on construit une surface entaille limitée par le profil extérieur, le profil fond et les plans délimitant la bande de roulement.
On définit une grandeur $TEMeridien_n$ correspondant à un taux d'entaillement méridien dans un plan méridien

$$TEMeridien_n = 1 - \frac{\text{surface entaille}}{\text{surface } totale}$$

n, avec . Il est alors possible de déterminer le taux d'entaillement volumique TEV comme étant la moyenne des taux d'entaillement méridien, avec $TEV = \frac{\sum_{i=1}^{N} TEMeridien_i}{\sum_{i=1}^{N} n_i}$ .

On peut également déterminer le taux d'entaillement volumique par d'autres méthodes connues de l'homme du métier.
La figure 4 est une vue de détail d'une partie d'une bande de roulement 20 selon l'invention. La bande de roulement 20 est ici à l'état neuf. Elle comprend une pluralité de blocs 21A, 21B qui s'étendent respectivement d'un des bords 25A, 25B de la bande de roulement 20 jusqu'à l'axe central C selon une certain courbure. L'axe central C comprend alors une alternance de blocs 21A, 21B ayant comme origine les bords 25A, 25B de la bande de roulement 20. La bande de roulement 20 est dite ici directionnelle, c'est-à-dire que les blocs 21A, 21B sont spécifiquement agencés pour optimiser les caractéristiques comportementales en fonction d'un sens de rotation prédéterminé. Ce sens de rotation est classiquement indiqué par une flèche sur le flanc du pneumatique (flèche notée R sur la figure 4). On notera que les blocs ont une hauteur maximale au moins égale à 5,5 mm et au plus égale à 9 mm. Préférentiellement, la hauteur maximale des blocs est au plus égale à 7,5 mm. Cette hauteur maximale est mesurée pour les blocs au niveau de l'axe central C. Elle correspond à la distance entre la surface de roulement 23 et la surface de fond 24 à ce niveau. La hauteur maximale d'un bloc correspond à la profondeur maximale des rainures qui délimitent ce bloc.

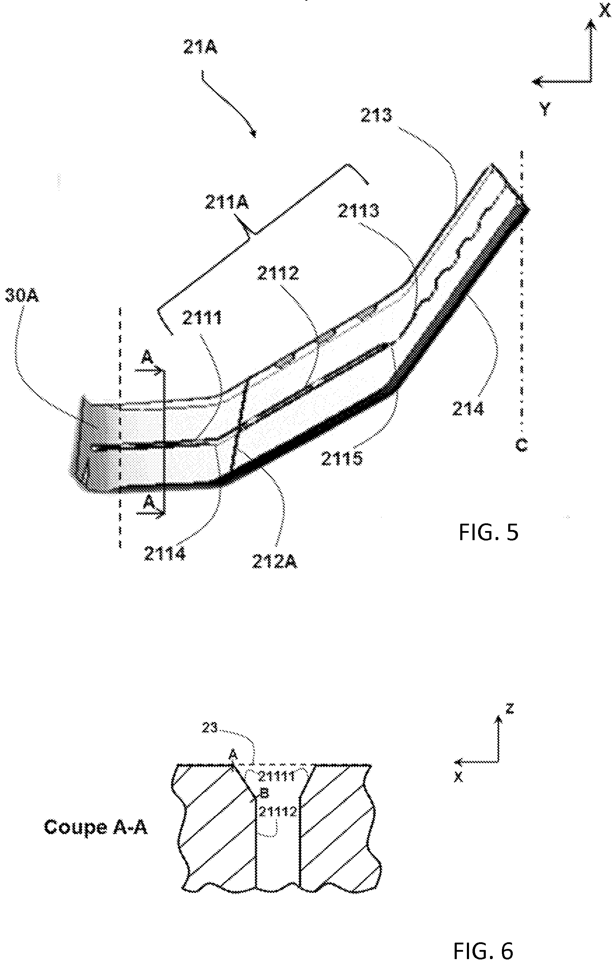

La figure 5 illustre plus spécifiquement un des blocs 21A de la pluralité de blocs. La description ci-dessous s'applique plus particulièrement pour un premier bloc 21A. Cette description peut s'appliquer également pour tout bloc 21A, 21B de la pluralité de blocs de la bande de roulement 20. Le bloc 21A comporte une incision principale 211A et une incision secondaire 212A. Il comporte également une première zone biseautée 213 et une seconde zone biseautée 214 au niveau de deux parois latérales principales du bloc 21A.
L'incision principale 211A débute à partir d'un des flancs 30A jusqu'à l'axe central C. Cette incision principale 211A est divisée en une première partie d'incision 2111, une seconde partie d'incision 2112 et une troisième partie d'incision 2113. La première partie d'incision 2111 et la seconde partie d'incision 2112 sont reliées entre elles au niveau d'un premier point de liaison 2114. La seconde partie d'incision 2112 et la troisième partie d'incision 2113 sont reliées entre elles au niveau d'un second point de liaison 2115. La première partie d'incision 2111 s'étend ainsi entre le flanc 30A et le premier point de liaison 2114. Plus particulièrement, cette première partie d'incision 2111 forme une trace rectiligne sur la surface de roulement entre le flanc 30A et le premier point de liaison 2114. Cette trace est globalement parallèle à la direction Y. Comme il est illustré à la figure 6, la première partie d'incision 2111 comprend deux plans inclinés 21111. Ces plans inclinés 21111 forment des chanfreins sur la bande de roulement 20. Les chanfreins permettent d'améliorer l'adhérence sur sol sec, et plus particulièrement les freinages sur un tel sol. Chaque plan incliné 21111 s'étend entre un premier point A et un second point B. Le premier point A correspond à l'intersection entre le plan incliné 21111 et la surface de roulement 23 de la bande de roulement. Le second point B correspond à l'intersection entre le plan incliné 21111 et une paroi latérale 21112 délimitant l'incision 21111. Le plan incliné 21111 est défini par une hauteur, une largeur et par un angle d'inclinaison par rapport à la direction circonférentielle X. La hauteur du plan incliné correspond à la distance entre le premier point A et le second point B selon une projection radiale, c'est-à-dire selon une projection sur l'axe Z. La hauteur du plan incliné est ici comprise entre 0,5 et 1mm. La largeur du plan incliné correspond à la distance entre le premier point A et le second point B selon une projection circonférentielle, c'est-à-dire selon une projection sur l'axe X. La largeur du plan incliné est ici comprise entre 1,5 et 2 mm. L'angle d'inclinaison de la partie inclinée est compris entre 30 degrés et 50 degrés par rapport à la direction circonférentielle X. La seconde partie d'incision 2112 s'étend entre le premier point de liaison 2114 et le second point de liaison 2115. Plus particulièrement, cette seconde partie d'incision 2112 forme une trace rectiligne sur la surface de roulement entre le premier point de liaison 2114 et le second point de liaison 2115. Cette trace fait un angle d'environ 30 degrés avec la direction axiale Y. La seconde partie d'incision 2112 comprend également deux plans inclinés formant des chanfreins sur la bande de roulement 20. La troisième partie d'incision 2113 s'étend entre le second point de liaison 2115 et une extrémité du bloc 21A, à proximité de l'axe central C. Plus particulièrement, la troisième partie d'incision 2113 forme une trace ondulée sur la surface de roulement entre ledit second point de liaison 2115 et l'extrémité du bloc 21A. Cette trace ondulée s'étend selon une direction principale qui fait un angle d'environ 45 degrés avec la direction axiale Y. La troisième partie d'incision 2113 ne comprend pas ici de plans inclinés formant des chanfreins. Le bloc 21A comprend également une incision secondaire 212A. Cette incision secondaire 212A forme une trace rectiligne sur la surface de roulement qui vient couper l'incision principale 211A au niveau de sa seconde partie d'incision 2112. L'incision secondaire 212A fait un angle d'environ 80 degrés avec la direction axiale Y. Enfin, les parois latérales principales du bloc 21A comprennent également des plans inclinés 213 et 214 qui forment des chanfreins.

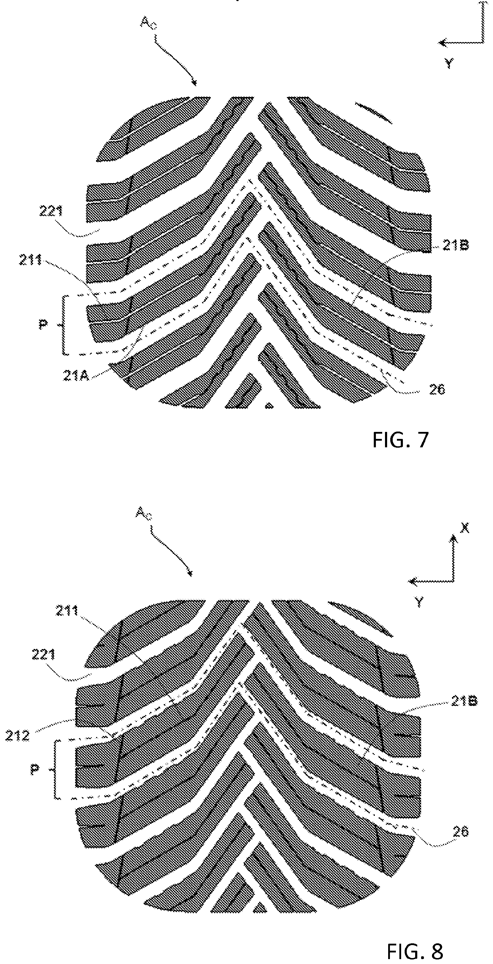

La figure 7 est une vue schématique, à un instant T, d'une aire de contact AC avec un sol de la bande de roulement du pneumatique de la figure 4. Par « aire de contact », on entend la surface formée par le pneumatique avec le sol à cet instant T. C'est par cette aire de contact que passent l'ensemble des efforts mécaniques entre le véhicule et le sol. L'ensemble des aires de contact déterminées à différents instants permet de reconstituer une image de la surface de roulement de la bande de roulement. L'aire de contact est ici sensiblement rectangulaire avec des portions de contour arrondis. Cette aire de contact comprend à la fois les surfaces de contact des blocs SC (surfaces pleines en grisé sur la figure 7) et les surfaces occupées par les entailles (surfaces vides en blanc sur la figure 7).

La différence entre l'aire de contact AC et la surface de contact SC des blocs permet de déterminer un taux d'entaillement surfacique TES de la bande de roulement, avec TES=(AC-SC)/AC , dans lequel le taux d'entaillement surfacique TES est au moins égal à 0,40 et au plus égal à 0,70 pour ladite bande de roulement. Ce taux d'entaillement surfacique TES illustre l'importance des entailles (rainures, incisions) sur la surface de roulement de la bande de roulement. Il est ici relativement élevé du fait de la présence d'un grand nombre de rainures obliques 221 qui délimitent les blocs 21A, 21B. De plus, ce taux d'entaillement surfacique TES est augmenté du fait de la présence des plans inclinés au niveau des parois principales des blocs 21A, 21B et dans une partie des incisions principales 211. Les plans inclinés sur la bande de roulement à l'état neuf limitent ainsi les surfaces de contact des blocs 21A, 21B. Dans un mode de réalisation préférentiel, le taux d'entaillement surfacique TES est supérieur ou égal à 0,50. Encore plus préférentiellement, le taux d'entaillement surfacique TES est supérieur ou égal à 0,55.

Dans un autre mode de réalisation préférentiel, le rapport entre le taux d'entaillement surfacique TES sur le taux d'entaillement volumique TEV est au moins égal à 1,5 et au plus égal à 1,9.

La figure 8 est une vue schématique à un instant T, d'une aire de contact AC de la bande de roulement du pneumatique de la figure 4, mais dans un certain état d'usure. L'usure de la bande de roulement est par exemple de l'ordre de 2 mm de profondeur. Dans cet état d'usure, les plans inclinés au niveau des parois principales des blocs 21A, 21B et les incisions principales 211A ont disparu de la bande de roulement. Les rainures obliques 221 présentent alors une largeur inférieure dans cette aire de contact AC. Dès lors, le taux d'entaillement surfacique TES diminue avec l'usure de la bande de roulement. Ainsi, le taux d'entaillement surfacique TES de la bande de roulement usée sur 2 mm de profondeur par rapport à la bande de roulement à l'état neuf est au moins égal à 0,41 fois le taux d'entaillement surfacique TES à l'état neuf et au plus égal à 0,66 fois ledit TES à l'état neuf. Dans un mode de réalisation préférentiel, le taux d'entaillement surfacique TES de la bande de roulement usée à 2 mm de profondeur par rapport à la bande de roulement à l'état neuf est au moins égal à 0,5 fois le TES à l'état neuf et au plus égal à 0,58 fois ledit TES à l'état neuf.

Il est possible de déterminer un taux d'entaillement volumique TEV de la bande de roulement de la figure 4, à partir de la méthode décrite à la figure 3. Les rainures 221, les incisions 211 et 212 forment ainsi des entailles dans la bande de roulement définissant un volume d'entailles VE dans ladite bande de roulement. Le rapport entre le volume d'entailles VE sur le volume total VT détermine un taux d'entaillement volumique TEV tel que TEV=VE/VT. Le taux d'entaillement volumique TEV est ici au moins égal à 0,24 et au plus égal à 0,35.

Dans un mode de réalisation préférentiel, le taux d'entaillement volumique TEV est au moins égal à 0,25.

Dans un mode de réalisation préférentiel, le taux d'entaillement volumique TEV est au moins égal à 0,26.

Dans un mode de réalisation préférentiel, le taux d'entaillement volumique TEV est au moins égal à 0,27.

Dans un mode de réalisation préférentiel, le taux d'entaillement volumique TEV est au moins égal à 0,28.

Dans un mode de réalisation préférentiel, le taux d'entaillement volumique TEV est au moins égal à 0,29.

Dans un mode de réalisation préférentiel, le taux d'entaillement volumique TEV est au moins égal à 0,30.

Dans un mode de réalisation préférentiel, le taux d'entaillement volumique TEV est au moins égal à 0,31.

Dans un mode de réalisation préférentiel, le taux d'entaillement volumique TEV est au moins égal à 0,32.

Dans un mode de réalisation préférentiel, le taux d'entaillement volumique TEV est au moins égal à 0,33.

Dans un mode de réalisation préférentiel, le taux d'entaillement volumique TEV est au moins égal à 0,34.

C'est le concepteur du pneumatique qui a le choix du taux d'entaillement volumique en fonction du compromis d'adhérence recherché entre une adhérence sur un sol enneigé et/ou une adhérence sur sol humide et/ou une adhérence sur sol sec.

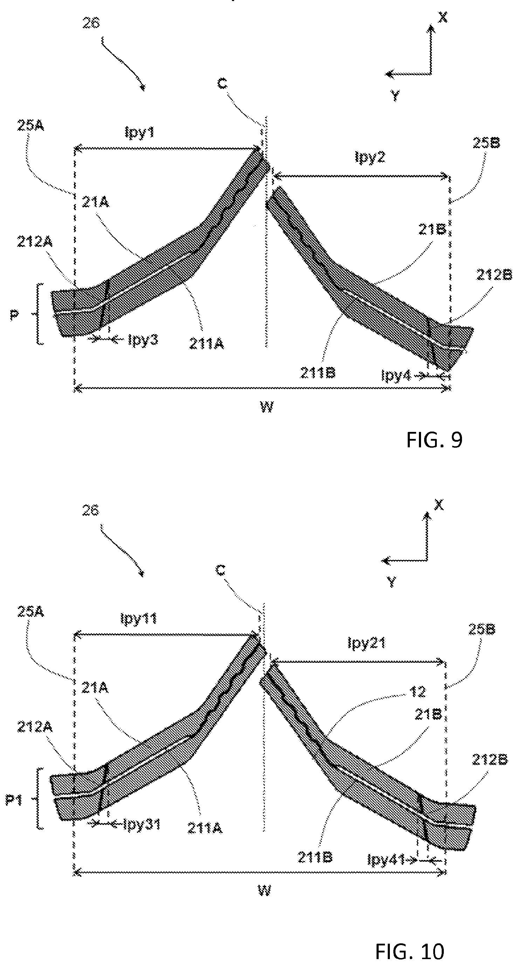

La figure 9 représente une partie de l'aire de contact de la figure 7 centrée sur un premier bloc 21A et sur un second bloc 21B disposés de part et d'autre de l'axe central C. Le premier bloc 21A et le second bloc 21B forment ici un motif 26 qui est spécifiquement délimité par des pointillés sur la figure 7. Les motifs de blocs 26 se succèdent selon la direction circonférentielle X selon un pas P de largeur ici constante. Par « motif », on entend un ensemble de blocs qui est répété selon la direction circonférentielle. Cette répétition peut se faire à iso-dimension. La bande de roulement est dite alors monopas. En variante, cette répétition peut se faire avec des dimensions différentes, notamment des valeurs de pas différentes. La bande de roulement est dite alors multipas. Avantageusement, le nombre de valeurs de pas différentes pour une bande de roulement multipas est compris entre 3 et 5.

Sur la figure 9, l'incision principale 211A du premier bloc 21A s'étend du premier bord 25A jusqu'à une extrémité du premier bloc 21A, à proximité de l'axe central C. Cette incision principale 211A a une longueur projetée lpy1 selon la direction axiale Y. De la même manière, l'incision principale 211B du second bloc 21B s'étend du second bord 25B jusqu'à une extrémité du second bloc 21B, à proximité de l'axe central C. Cette incision principale 211B a une longueur projetée lpy2 selon la direction axiale Y. Les longueurs lpy1 et lpy2 ont ici une valeur identique correspondant à la moitié de la largeur W de la bande de roulement. Il est également possible de déterminer les longueurs projetées lpy3 et lpy4 des incisions secondaires 211A et 211B du premier bloc 21A et du second bloc 21B. A partir de ces longueurs projetées, il est possible de déterminer une densité d'incision SD. Cette densité d'incision correspond au rapport entre la somme des longueurs projetées lpy1, lpy2, lpy3 et lpy4 des incisions principales 211A, 211B et des incisions secondaires 212A, 212B selon la direction axiale Y sur le produit du pas P du motif 26 et de la largeur W de la bande de roulement,

$$SD = \frac{lpy1 + lpy2 + lpy3 + lpy4}{P * W} * 1000$$

l'ensemble étant multiplié par 1000, tel que . La densité d'incision SD dans le motif 26 est ici comprise entre 10 mm$^{-1}$ et 70 mm$^{-1}$.

Dans un mode de réalisation préférentiel, la densité d'incision SD dans le motif 26 est au moins égale à 25 mm$^{-1}$ et au plus égale à 50 mm$^{-1}$. Préférentiellement, la densité d'incision SD dans le motif 26 est au moins égale à 30 mm$^{-1}$ et au plus égale à 40 mm$^{-1}$.

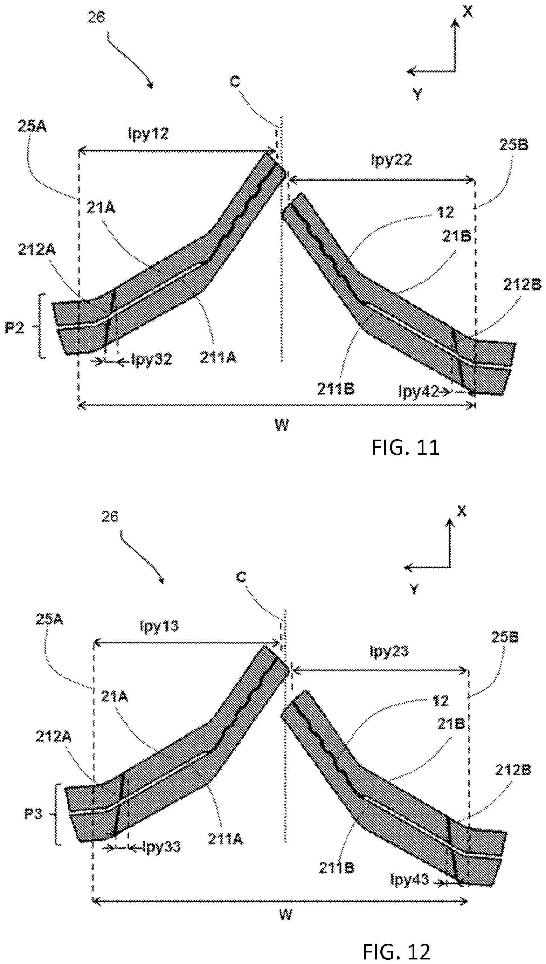

Dans un autre mode de réalisation, la bande de roulement est une bande de roulement multipas comprenant un premier motif, un second motif et un troisième motif présentant trois pas P1, P2, P3 différents. La figure 10 illustre ce premier motif. La figure 11 illustre le second motif. Enfin la figure 12 illustre le troisième motif.

La figure 10 illustre ainsi un premier motif ayant un premier pas P 1. Ce premier motif comprend le premier bloc 21A et le second bloc 21B disposés de part et d'autre de l'axe central C. L'incision principale 211A du premier bloc 21A s'étend du premier bord 25A jusqu'à une extrémité du premier bloc 21A, à proximité de l'axe central C. Cette incision principale 211A a une longueur projetée lpy11 selon la direction axiale Y. De la même manière, l'incision principale 211B du second bloc 21B s'étend du second bord 25B jusqu'à une extrémité du second bloc 21B, à proximité de l'axe central C. Cette incision principale 211B a une longueur projetée lpy21 selon la direction axiale Y. Les longueurs lpy11 et lpy21 ont ici une valeur identique correspondant à la moitié de la largeur W de la bande de roulement. Il est également possible de déterminer les longueurs projetées lpy31 et lpy41 des incisions secondaires 212A et 212B du premier bloc 21A et du second bloc 21B. A partir de ces longueurs projetées, il est possible de déterminer une densité d'incision SD1. Cette densité d'incision correspond au rapport entre la somme des longueurs projetées lpy11, lpy21, lpy31 et lpy41 des incisions principales 211A, 211B et des incisions secondaires 212A, 212B selon la direction axiale Y sur le produit du pas P du motif 26 et de la largeur W de la bande de roulement, l'ensemble étant multiplié par 1000, tel que

$$SD1 = \frac{lpy11+lpy21+lpy31+lpy41}{P1*W} * 1000$$

La figure 11 illustre ainsi un second motif ayant un second pas P2, dans lequel le second pas P2 est supérieur au premier pas P1. Ce second motif comprend le premier bloc 21A et le second bloc 21B disposés de part et d'autre de l'axe central C. L'incision principale 211A du premier bloc 21A s'étend du premier bord 25A jusqu'à une extrémité du premier bloc 21A, à proximité de l'axe central C. Cette incision principale 211A a une longueur projetée lpy12 selon la direction axiale Y. De la même manière, l'incision principale 211B du second bloc 21B s'étend du second bord 25B jusqu'à une extrémité du second bloc 21B, à proximité de l'axe central C. Cette incision principale 211B a une longueur projetée lpy22 selon la direction axiale Y. Les longueurs lpy12 et lpy22 ont ici une valeur identique correspondant à la moitié de la largeur W de la bande de roulement. Il est également possible de déterminer les longueurs projetées lpy32 et lpy42 des incisions secondaires 211A et 211B du premier bloc 21A et du second bloc 21B. A partir de ces longueurs projetées, il est possible de déterminer une densité d'incision SD2. Cette densité d'incision correspond au rapport entre la somme des longueurs projetées lpy12, lpy22, lpy32 et lpy42 des incisions principales 211A, 211B et des incisions secondaires 212A, 212B selon la direction axiale Y sur le produit du pas P du motif 26 et de la largeur W de la bande de roulement, l'ensemble étant multiplié par 1000, tel que $SD2 = \dfrac{lpy12+lpy22+lpy32+lpy42}{P2*W} * 1000$ .

La figure 12 illustre un troisième motif ayant un troisième pas P3, dans lequel le troisième pas P3 est supérieur au second pas P2. Ce troisième motif comprend le premier bloc 21A et le second bloc 21B disposés de part et d'autre de l'axe central C. L'incision principale 211A du premier bloc 21A s'étend du premier bord 25A jusqu'à une extrémité du premier bloc 21A, à proximité de l'axe central C. Cette incision principale 211A a une longueur projetée lpy13 selon la direction axiale Y. De la même manière, l'incision principale 211B du second bloc 21B s'étend du second bord 25B jusqu'à une extrémité du second bloc 21B, à proximité de l'axe central C. Cette incision principale 211B a une longueur projetée lpy23 selon la direction axiale Y. Les longueurs lpy13 et lpy23 ont ici une valeur identique correspondant à la moitié de la largeur W de la bande de roulement. Il est également possible de déterminer les longueurs projetées lpy33 et lpy43 des incisions secondaires 211A et 211B du premier bloc 21A et du second bloc 21B. A partir de ces longueurs projetées, il est possible de déterminer une densité d'incision SD3. Cette densité d'incision correspond au rapport entre la somme des longueurs projetées lpy13, lpy23, lpy33 et lpy43 des incisions principales 211A, 211B et des incisions secondaires 212A, 212B selon la direction axiale Y sur le produit du pas P du motif 26 et de la largeur W de la bande de roulement, l'ensemble étant multiplié par 1000, tel que

$$SD3 = \frac{lpy13+lpy23+lpy33+lpy43}{P3*W} * 1000.$$

Dans le mode de réalisation des figures 10, 11 et 12 la bande de roulement comprend un arrangement de N1 motifs de pas P1, de N2 motifs de pas P2 et de N3 motifs de pas P3. Il est ainsi possible de déterminer une densité moyenne d'incision SDmoy correspondant à la moyenne des densités d'incisions SD1, SD2, SD3 des motifs de pas P1, P2, P3 sur toute la circonférence de la bande de roulement. La densité moyenne d'incisions SDmoy est ainsi pondérée en fonction du nombre de motifs N1, N2, N3 par type de motif et du pas P1, P2, P3, tel que : SDmoy=((SD 1 *N1 *P 1+SD2*N2*P2+SD3 *N3 *P3))/(N1 *P 1+N2*P2+N3 *P3).

Les motifs de pas P1, P2, P3 sont arrangés de manière aléatoire sur la bande de roulement afin de limiter l'émergence d'un bruit du pneumatique en roulage. Ainsi pour un pneumatique de dimension 205/55 R 16, l'arrangement entre motifs de pas P1, P2 etP3 pourrait être le suivant : P1 P1 P2 P1 P2 P2 P2 P2 P1 P1 P2 P1 P1 P1 P2 P2 P3 P2 P2 P3 P2 P1 P2 P2 P1 P1 P1 P1 P2 P1 P2 P1 P1 P1 P1 P2 P1 P1 P2 P2 P3 P3 P3 P2 P2 P3 P3 P3 P3 P3 P2 P2 P1 P2 P2 P3 P2 P1 P2 P2 P1 P2 P3 P2 P2 P1 P2 P2 P2 P1 P1 P1 P2 P3 P2 P1. Un tel arrangement comporterait alors 21 motifs de pas P1, 35 motifs de pas P2 et 13 motifs de pas P3. Comme il a déjà été précisé, un pas P est déterminé comme la distance entre les centres de deux rainures obliques adjacentes encadrant un bloc. Afin de déterminer avec précision les valeurs des pas P1, P2 et P3, ceux-ci sont mesurés dans des groupes de motifs appartenant à un même type de motif par exemple dans des groupes de motifs P1 P1 P1, P2 P2 P2 et P3 P3 P3.

Ainsi avec un tel arrangement entre les motifs, il est possible de déterminer une valeur de densité moyenne d'incision SDmoy sur toute la circonférence du pneumatique comprise entre 10 mm$^{-1}$ et 70 mm$^{-1}$. Dans un mode de réalisation préférentiel, la densité moyenne d'incision SDmoy est au moins égale à 25 mm$^{-1}$ et au plus égale à 50 mm$^{-1}$. Préférentiellement, la densité moyenne d'incision SDmoy est au moins égale à 30 mm$^{-1}$ et au plus égale à 40 mm$^{-1}$.

Pour l'ensemble des modes de réalisation illustrés aux figures 1 à 12, chaque bloc est formé à partir d'un matériau caoutchoutique. Dans un mode de réalisation préférentiel, la composition de ce matériau caoutchoutique a une température de transition vitreuse comprise entre -40°C et -10°C, et préférentiellement entre -35°C et -15°C et un module de cisaillement mesuré à 60°C compris entre 0,5 MPa et 2 MPa, et préférentiellement entre 0,7 MPa et 1,5 MPa.

Dans un mode de réalisation préférentiel, la composition du matériau caoutchoutique des blocs est à base d'au moins :

- une matrice élastomère comprenant plus de 50% en masse d'un SBR solution qui porte une fonction silanol et une fonction amine ;

- 20 à 200 pce d'au moins une silice ;

- un agent de couplage pour coupler la silice au SBR solution ;

- 10 à 100 pce d'une résine hydrocarbonée présentant une Tg supérieure à 20°C ;

- 15 à 50 pce d'un plastifiant liquide.

Le SBR solution de ce mode de réalisation préférentiel est un copolymère de styrène et de butadiène préparé en solution. Il a pour caractéristique de porter une fonction silanol et une fonction amine. La fonction silanol du SBR solution portant une fonction silanol et une fonction amine peut par exemple être introduite par hydrosilylation de la chaîne élastomère par un silane portant un groupement alcoxysilane, suivie d'une hydrolyse de la fonction alcoxysilane en fonction silanol. La fonction silanol du SBR solution portant une fonction silanol et une fonction amine peut également être introduite par réaction des chaînes élastomères vivantes avec un composé polysiloxane cyclique tel que décrit dans EP 0 778 311 La fonction amine du SBR solution portant une fonction silanol et une fonction amine peut par exemple être introduite par un amorçage de la polymérisation avec un initiateur portant une telle fonction. Un SBR solution portant une fonction silanol et une fonction amine peut également être préparé par réaction des chaînes élastomères vivantes avec un composé portant une fonction alcoxysilane et une fonction amine selon le mode opératoire décrit dans la demande de brevet EP 2 285 852, suivie d'une hydrolyse de la fonction alcoxysilane en fonction silanol. Selon ce mode de préparation, la fonction silanol et la fonction amine sont préférentiellement situées à l'intérieur de la chaîne du SBR solution, en dehors des extrémités de chaîne. La réaction d'hydrolyse de la fonction alcoxysilane portée par le SBR solution en fonction silanol peut être conduite selon le mode opératoire décrit dans la demande de brevet EP 2 266 819 A1 ou bien par une étape de stripping de la solution contenant le SBR solution. La fonction amine peut être une amine primaire, secondaire ou tertiaire, de préférence tertiaire.

L'invention n'est pas limitée aux modes de réalisation et variantes présentées et d'autres modes de réalisation et variantes apparaîtront clairement à l'homme du métier sans sortir du cadre défini par les revendications ci-jointes.

Ainsi, sur la figure 4, les blocs 21 A, 21B sont présentés comme étant continus d'un bord de la bande de roulement 25A, 25B vers l'axe central C. En variante, les blocs peuvent être discontinus. Par exemple, les blocs peuvent être interrompus par une ou plusieurs rainures. La ou les plusieurs rainures peuvent être d'orientation sensiblement égale à l'orientation des incisions secondaires 212.

**Revendications**

**1.** Pneumatique comportant une bande de roulement (10) directionnelle de largeur W ladite bande de roulement (10) ayant un volume total VT, ladite bande de roulement comprenant une pluralité d'entailles (221, 211, 212) définissant un volume d'entailles VE dans ladite bande de roulement, le rapport entre le volume d'entailles VE sur le volume total déterminant un taux d'entaillement volumique TEV tel que TEV=VE/VT , une partie de la pluralité des entailles (211) délimitant des blocs (21A, 21B) en matériau caoutchoutique, lesdits blocs (21A, 21B) étant organisés dans des motifs (26) de blocs de pas P se succédant selon la direction circonférentielle (X), une partie de la pluralité des entailles formant une ou plusieurs incisions (211, 212) dans un des motifs selon une densité d'incision SD, ladite densité d'incision SD correspondant au rapport entre une somme de la/des longueur(s) projetée(s) lpyi de la/des incision(s) (211, 212) selon une direction axiale (Y) sur le produit du pas P du motif et de la largeur W de la bande

$$SD = \frac{\sum_{i=1}^{n} lpyi}{P*W} * 1000$$

de roulement, l'ensemble étant multiplié par 1000, tel que , avec n le nombre d'incisions dans le motif et lpyi la longueur projetée de la ième incision, ladite bande de roulement formant une aire de contact AC avec le sol, une partie des blocs (21A, 21B) de la bande de roulement formant une surface de contact SC des blocs avec ledit sol dans ladite aire de contact AC, le rapport entre la différence entre ladite aire de contact AC et la surface de contact SC des blocs et l'aire de contact AC déterminant un taux d'entaillement surfacique TES de la bande de roulement, avec TES=(AC-SC)/AC **caractérisé en ce que**, pour ladite bande de roulement à l'état neuf :

- la densité d'incision SD dans tout motif de pas P est comprise entre 10 mm$^{-1}$ et 70 mm$^{-1}$;
- le rapport TES/TEV dudit taux d'entaillement surfacique TES sur ledit taux d'entaillement volumique TEV est au moins égal à 1,5 et au plus égal à 1,9.

2. Pneumatique selon la revendication 1, dans lequel le taux d'entaillement volumique TEV est au moins égal à 0,24 et au plus égal à 0,35.

3. Pneumatique selon l'une quelconque des revendications 1 ou 2, dans lequel le taux d'entaillement surfacique TES est au moins égal à 0,40 et au plus égal à 0,70 pour ladite bande de roulement à l'état neuf.

4. Pneumatique selon la revendication 3, **dans lequel** ledit taux d'entaillement surfacique TES est supérieur ou égal à 0,45.

5. Pneumatique selon l'une quelconque des revendications 3 ou 4, **dans lequel** ledit taux d'entaillement surfacique TES est supérieur ou égal à 0,50 et préférentiellement supérieur ou égal à 0,55.

6. Pneumatique selon l'une quelconque des revendications 1 à 5 **dans lequel** la bande de roulement comprend différents types de motifs Mj, avec j supérieur ou égal à 2, les motifs appartenant à un même type de motif ayant un même pas, les pas entre des motifs appartenant respectivement à deux types de motifs différents étant différents, et en ce que la densité moyenne d'incision SDmoy sur toute la circonférence du pneumatique est comprise entre 10 mm$^{-1}$ et 70 mm$^{-1}$, ladite densité moyenne d'incisions SDmoy correspondant à la moyenne des densités d'incisions SDj des motifs des différents types de motifs Mj de pas PJ sur toute la circonférence de la bande de roulement, ladite densité moyenne d'incisions SDmoy étant pondérée en fonction du nombre de motifs Nj par type de motif Mj et du pas Pj des motifs appartenant au type de motif Mj sur ladite circonférence de la bande de roulement, tel que

$$SDmoy = \frac{\sum_{j=1}^{m}(SDj*Nj*Pj)}{\sum_{j=1}^{m}(Nj*Pj)}$$

, avec m le nombre de types de motifs différents, SDj la densité d'incisions dans un motif appartenant au type de motif Mj, Pj le pas des motifs appartenant au type de motif Mj, Nj le nombre de motifs appartenant au type de motif Mj, ladite bande de roulement étant à l'état neuf.

7. Pneumatique selon l'une quelconque des revendications 1 à 6, **dans lequel** la densité d'incision SD ou la densité moyenne d'incision SDmoy est au moins égale à 25 mm$^{-1}$ et au plus égale à 50 mm$^{-1}$.

8. Pneumatique selon l'une quelconque des revendications 1 à 7, **dans lequel** la densité d'incision SD ou la densité moyenne d'incision SDmoy est au moins égale à 30 mm$^{-1}$ et au plus égale à 40 mm$^{-1}$.

9. Pneumatique selon l'une quelconque des revendications 1 à 8, dans lequel, dans la bande de roulement à l'état neuf, les blocs (21A, 21B) ont une hauteur maximale au moins égale à 5,5 mm et au plus égale à 9 mm, et de préférence au plus égale à 7,5 mm.

10. Pneumatique selon l'une quelconque des revendications 1 à 9, **dans lequel** la composition du matériau caoutchoutique des blocs a une température de transition vitreuse Tg comprise entre -40°C et -10°C et préférentiellement entre -35°C et -15°C et un module complexe de cisaillement dynamique G* mesuré à 60°C compris entre 0,5 MPa et 2 MPa, et préférentiellement entre 0,7 MPa et 1,5 MPa, la température de transition vitreuse étant mesurée selon la norme selon la norme ASTM D 5992-96, et le module complexe de cisaillement étant quant à lui mesuré sous un cisaillement simple alterné, ayant une amplitude crête-crête égale à 0,7 MPa et une fréquence égale à 10 Hz .

11. Pneumatique selon l'une quelconque des revendications 1 à 10, **dans lequel** la composition du matériau caoutchoutique des blocs (21A, 21B) comprend un mélange élastomérique, ledit mélange élastomérique comportant un élastomère diénique modifié comprenant au moins un groupe fonctionnel comprenant un atome de silicium, ce dernier se situant au sein de la chaîne principale de l'élastomère y compris les extrémités de chaîne.

12. Pneumatique selon la revendication 11, **dans lequel** l'élastomère diénique modifié comprend un groupe fonctionnel comprenant un atome de silicium en une extrémité de la chaîne principale de l'élastomère.

13. Pneumatique selon la revendication 12, **dans lequel** le groupe fonctionnel comprend une fonction silanol.

14. Pneumatique selon la revendication 13, **dans lequel** le groupe fonctionnel est choisi parmi une fonction silanol ou un groupement polysiloxane ayant une extrémité silanol.

15. Pneumatique selon la revendication 11, **dans lequel** l'élastomère diénique modifié du mélange élastomérique constitutif du bloc (21A, 21B) comprend un groupe fonctionnel comprenant un atome de silicium en milieu de chaîne.

16. Pneumatique selon la revendication 12 ou la revendication 15, **dans lequel** l'atome de silicium du groupe fonctionnel est substitué par au moins une fonction alcoxy, éventuellement totalement ou partiellement hydrolysée en hydroxyle.

17. Pneumatique selon la revendication 16, **dans lequel** l'atome de silicium du groupe fonctionnel est substitué, directement ou par l'intermédiaire d'un radical hydrocarboné divalent, par au moins une autre fonction comprenant au moins un hétéroatome choisi parmi N, S, O, P.

18. Pneumatique selon l'une quelconque des revendications 1 à 17, **dans lequel** ledit pneumatique a une certification hiver 3PMSF, c'est-à-dire "Three-Peak Mountain Snowflake" ou "trois pics avec flocon de neige", ladite certification étant indiquée sur un flanc (10A, 30B) du pneumatique, attestant de ses excellentes performances sur sol enneigé et sur sol mouillé.

**Patentansprüche**

1. Reifen mit einem richtungsgebundenen Laufstreifen (10) mit der Breite W, wobei der Laufstreifen (10) ein Gesamtvolumen VT hat, wobei der Laufstreifen eine Mehrzahl von Einschnitten (221, 211, 212) umfasst, die ein Einschnittvolumen VE in dem Laufstreifen definieren, wobei das Verhältnis des Einschnittvolumens VE zum Gesamtvolumen einen volumenbezogenen Negativprofilanteil TEV bestimmt, so dass TEV=VE/VT, wobei ein Teil der Mehrzahl der Einschnitte (211) Blöcke (21A, 21B) aus Kautschukmaterial begrenzt, wobei die Blöcke (21A, 21B) in Mustern (26) aus Blöcken mit der Schrittweite P organisiert sind, die entlang der Umfangsrichtung (X) aufeinander folgen, wobei ein Teil der Mehrzahl der Einschnitte eine oder mehrere Lamellen (211, 212) in einem der Muster gemäß einer Lamellendichte SD bildet, wobei die Lamellendichte SD dem Verhältnis einer Summe aus der/den projizierten Länge(n) lpyi der Lamelle(n) (211, 212) entlang einer axialen Richtung (Y) zum Produkt aus der Schrittweite P des Musters und der Breite W des Laufstreifens entspricht, wobei das Ganze mit 1000 multipliziert wird, so dass

$$SD = \frac{\sum_{i=1}^{n} lpyi}{P*W} * 1000$$

, worin n die Anzahl der Lamellen in dem Muster und lpyi die projizierte Länge der i-ten Lamelle ist, wobei der Laufstreifen einen Kontaktbereich AC mit dem Boden bildet, wobei ein Teil der Blöcke (21A, 21B) des Laufstreifens eine Kontaktfläche SC der Blöcke mit dem Boden in dem Kontaktbereich AC bildet, wobei das Verhältnis der Differenz zwischen dem Kontaktbereich AC und der Kontaktfläche SC der Blöcke zum Kontaktbereich AC einen flächenbezogenen Negativprofilanteil TES des Laufstreifens bestimmt, mit TES=(AC-SC)/AC, **dadurch gekennzeichnet, dass** bei dem Laufstreifen im Neuzustand:

- die Lamellendichte SD in jedem Muster mit der Schrittweite P zwischen 10 mm$^{-1}$ und 70 mm$^{-1}$ beträgt,
- das Verhältnis TES/TEV des flächenbezogenen Negativprofilanteils TES zum volumenbezogenen Negativprofilanteil TEV mindestens 1,5 und höchstens 1,9 beträgt.

2. Reifen nach Anspruch 1, bei dem der volumenbezogene Negativprofilanteil TEV mindestens 0,24 und höchstens 0,35 beträgt.

3. Reifen nach einem der Ansprüche 1 oder 2, bei dem der flächenbezogene Negativprofilanteil TES bei dem Reifen im Neuzustand mindestens 0,40 und höchstens 0,70 beträgt.

4. Reifen nach Anspruch 3, bei dem der flächenbezogene Negativprofilanteil TES größer als oder gleich 0,45 ist.

5. Reifen nach einem der Ansprüche 3 oder 4, bei dem der flächenbezogene Negativprofilanteil TES größer als oder gleich 0,50 und bevorzugt größer als oder gleich 0,55 ist.

6. Reifen nach einem der Ansprüche 1 bis 5, bei dem der Laufstreifen verschiedene Mustertypen Mj mit j größer als oder gleich 2 umfasst, wobei die einem selben Mustertyp angehörenden Muster eine selbe Schrittweite haben, wobei die Schrittweite zwischen Mustern, die jeweils zwei verschiedenen Mustertypen angehören, verschieden ist, und bei dem die mittlere Lamellendichte SDmoy über den gesamten Umfang des Reifens zwischen 10 mm$^{-1}$ und 70 mm$^{-1}$ beträgt, wobei die mittlere Lamellendichte SDmoy dem Mittelwert der Lamellendichten SDj der Muster der verschiedenen Mustertypen Mj mit der Schrittweite PJ über den gesamten Umfang des Laufstreifens entspricht, wobei die mittlere Lamellendichte SDmoy in Abhängigkeit von der Anzahl von Mustern Nj je Mustertyp Mj und von der Schrittweite Pj der dem Mustertyp Mj angehörenden Muster über den Umfang des Laufstreifens gewichtet wird,

$$SDmoy = \frac{\sum_{j=1}^{m}(SDj * Nj * Pj)}{\sum_{j=1}^{m}(Nj * Pj)}$$

so dass , worin m die Anzahl verschiedener Mustertypen ist, SDj die Lamellendichte in einem dem Mustertyp Mj angehörenden Muster ist, Pj die Schrittweite der dem Mustertyp Mj angehörenden Muster ist, Nj die Anzahl der dem Mustertyp Mj angehörenden Muster ist, wobei der Laufstreifen im Neuzustand ist.

7. Reifen nach einem der Ansprüche 1 bis 6, bei dem die Lamellendichte SD oder die mittlere Lamellendichte SDmoy mindestens 25 mm$^{-1}$ und höchstens 50 mm$^{-1}$ beträgt.

8. Reifen nach einem der Ansprüche 1 bis 7, bei dem die Lamellendichte SD oder die mittlere Lamellendichte SDmoy mindestens 30 mm$^{-1}$ und höchstens 40 mm$^{-1}$ beträgt.

9. Reifen nach einem der Ansprüche 1 bis 8, bei dem, in dem Laufstreifen im Neuzustand, die Blöcke (21A, 21B) eine maximale Höhe von mindestens 5,5 mm und höchstens 9 mm und bevorzugt höchstens 7,5 mm haben.

10. Reifen nach einem der Ansprüche 1 bis 9, bei dem die Zusammensetzung des Kautschukmaterials der Blöcke eine Glasübergangstemperatur Tg zwischen -40 °C und -10 °C und bevorzugt zwischen -35 °C und -15 °C und einen komplexen dynamischen Schermodul, gemessen bei 60 °C, zwischen 0,5 MPa und 2 MPa und bevorzugt zwischen 0,7 MPa und 1,5 MPa hat, wobei die Glasübergangstemperatur nach der Norm ASTM D 5992-96 gemessen wird und der komplexe Schermodul wiederum unter einer einfachen alternierenden Scherung mit einer Spitze-Spitze-Amplitude von 0,7 MPa und einer Frequenz von 10 Hz gemessen wird.

11. Reifen nach einem der Ansprüche 1 bis 10, bei dem die Zusammensetzung des Kautschukmaterials der Blöcke (21A, 21B) eine Elastomermischung umfasst, wobei die Elastomermischung ein modifiziertes Dienelastomer beinhaltet, das mindestens eine funktionelle Gruppe umfasst, die ein Siliciumatom umfasst, wobei sich Letzteres in der Hauptkette des Elastomers einschließlich der Kettenenden befindet.

12. Reifen nach Anspruch 11, bei dem das modifizierte Dienelastomer eine funktionelle Gruppe umfasst, die ein Siliciumatom an einem Ende der Hauptkette des Elastomers umfasst.

13. Reifen nach Anspruch 12, bei dem die funktionelle Gruppe eine Silanolfunktion umfasst.

14. Reifen nach Anspruch 13, bei dem die funktionelle Gruppe unter einer Silanolfunktion oder einer Polysiloxangruppierung, die ein Silanolende hat, gewählt ist.

15. Reifen nach Anspruch 11, bei dem das modifizierte Dienelastomer der Elastomermischung, aus welcher der Block (21A, 21B) besteht, eine funktionelle Gruppe umfasst, die ein Siliciumatom in der Kettenmitte umfasst.

16. Reifen nach Anspruch 12 oder Anspruch 15, bei dem das Siliciumatom der funktionellen Gruppe durch mindestens eine Alcoxyfunktion, gegebenenfalls vollständig oder teilweise zu Hydroxyl hydrolisiert, substituiert ist.

17. Reifen nach Anspruch 16, bei dem das Siliciumatom der funktionellen Gruppe, direkt oder über einen zweiwertigen Kohlenwasserstoffrest, durch mindestens eine weitere Funktion substituiert ist, die mindestens ein unter N, S, O, P gewähltes Heteroatom umfasst.

18. Reifen nach einem der Ansprüche 1 bis 17, bei dem der Reifen eine Winterzertifizierung 3PMSF, d. h. "Three-Peak Mountain Snowflake" oder "drei Gipfel mit Schneeflocke" besitzt, wobei die Zertifizierung auf einer Flanke (10A, 30B) des Reifens angegeben ist und seine ausgezeichneten Leistungen auf verschneitem Boden und auf nassem Boden bescheinigt.

**Claims**

1.  Tyre comprising a directional tread (10) of width W, said tread (10) having a total volume VT, said tread comprising a plurality of voids (221, 211, 212) defining a voids volume VE in said tread, the ratio of the voids volume VE to the total volume determining a volumetric voids ratio TEV such that TEV=VE/VT, part of the plurality of voids (211) delimiting blocks (21A, 21B) of rubbery material, said blocks (21A, 21B) being organized into patterns (26) of blocks of pitch P succeeding one another in the circumferential direction (X), part of the plurality of voids forming one or more sipes (211, 212) in one of the patterns at a sipes density SD, said sipes density SD corresponding to the ratio of a sum of the projected length(s) lpyi of the sipe(s) (211, 212) in an axial direction(Y) to the product of the pitch P

    $$SD = \frac{\sum_{i=1}^{n} lpyi}{P*W} * 1000$$

    of the pattern times the width W of the tread, all multiplied by 1000, such that , where n is the number of sipes in the pattern, and lpyi is the projected length of the ith sipe, said tread forming a contact patch AC in which the tyre is in contact with the ground, a part of the blocks (21A, 21B) of the tread forming a contact surface SC via which the blocks are in contact with said ground in said contact patch AC, the ratio of the difference between the area of said contact patch AC and the area of the contact surface SC of the blocks to the area of the contact patch AC determining a surface voids ratio TES of the tread, where TES=(AC-SC)/AC, **characterized in that,** for said tread when new:

    - the sipes density SD in any pattern of pitch P is comprised between 10 mm$^{-1}$ and 70 mm$^{-1}$,
    - the ratio TES/TEV of said surface voids ratio TES to said volumetric voids ratio TEV is at least equal to 1.5 and at most equal to 1.9.

2.  Tyre according to Claim 1, **wherein** the volumetric voids ratio TEV is at least equal to 0.24 and at most equal to 0.35.

3.  Tyre according to either one of Claims 1 or 2, **wherein** the surface voids ratio TES is at least equal to 0.40 and at most equal to 0.70 for said tread when new.

4.  Tyre according to Claim 3, **wherein** said surface voids ratio TES is greater than or equal to 0.45.

5.  Tyre according to either one of Claims 3 or 4, **wherein** said surface voids ratio TES is greater than or equal to 0.50, and preferably greater than or equal to 0.55.

6.  Tyre according to any one of Claims 1 to 5, **wherein** the tread comprises different pattern types Mj, where j is greater than or equal to 2, the patterns belonging to the one same pattern type having the one same pitch, the pitch between patterns belonging to two different respective pattern types being different, **and wherein** the mean sipes density SDmean over the entire circumference of the tyre is comprised between 10 mm$^{-1}$ and 70 mm$^{-1}$, said mean sipes density SDmean corresponding to the mean of the sipes densities SDj of the patterns of the different pattern types Mj of pitch Pj over the entire circumference of the tread, said mean sipes density SDmean being weighted according to the number of patterns Nj per pattern type Mj and according to the pitch Pj of the patterns belonging to that pattern

    $$SDmean = \frac{\sum_{j=1}^{m}(SDj*Nj*Pj)}{\sum_{j=1}^{m}(Nj*Pj)}$$

    type Mj over said circumference of the tread, such that , where m is the number of different pattern types, SDj is the sipes density in a pattern belonging to the pattern type Mj, Pj is the pitch of the patterns belonging to the pattern type Mj, and Nj is the number of patterns belonging to the pattern type Mj, when said tread is new.

7.  Tyre according to any one of Claims 1 to 6, **wherein** the sipes density SD or the mean sipes density SDmean is at least equal to 25 mm$^{-1}$ and at most equal to 50 mm$^{-1}$.

8.  Tyre according to any one of Claims 1 to 7, **wherein** the sipes density SD or the mean sipes density SDmean is at least equal to 30 mm$^{-1}$ and at most equal to 40 mm$^{-1}$.

9.  Tyre according to any one of Claims 1 to 8, **wherein,** in the tread when new, the blocks (21A, 21B) have a maximum height at least equal to 5.5 mm and at most equal to 9 mm, and preferably at most equal to 7.5 mm.

10. Tyre according to any one of Claims 1 to 9, **wherein** the composition of the rubbery material of the blocks has a glass transition temperature Tg comprised between -40°C and -10°C and preferably between -35°C and -15°C and a complex dynamic shear modulus G* measured at 60°C comprised between 0.5 MPa and 2 MPa, and preferably between 0.7 MPa and 1.5 MPa, the glass transition temperature being measured according to the ASTM D5992-96 standard, and the complex shear modulus being measured under alternating simple shear, having a peak-to-peak amplitude equal to 0.7 MPa and a frequency of 10 Hz.

11. Tyre according to any one of Claims 1 to 10, **wherein** the composition of the rubbery material of the blocks (21A, 21B) comprises an elastomer compound, said elastomer compound containing a modified diene elastomer containing at least one functional group comprising a silicon atom, the latter being situated within the main chain of the elastomer, including the ends of the chain.

12. Tyre according to Claim 11, **wherein** the modified diene elastomer comprises a functional group containing a silicon atom at one end of the main chain of the elastomer.

13. Tyre according to Claim 12, **wherein** the functional group contains a silanol functional group.

14. Tyre according to Claim 13, **wherein** the functional group is selected from a silanol functional group or a polysiloxane functional group having a silanol end.

15. Tyre according to Claim 11, **wherein** the modified diene elastomer of the elastomeric compound that makes up the block (21A, 21B) comprises a functional group containing a silicon atom in the middle of the chain.

16. Tyre according to Claim 12 or Claim 15, **wherein** the silicon atom of the functional group is substituted by at least one alkoxy functional group which may potentially have been fully or partially hydrolysed to hydroxyl.

17. Tyre according to Claim 16, **wherein** the silicon atom of the functional group is substituted directly or via a divalent hydrocarbon radical, by at least one other functional group containing at least one heteroatom selected from N, S, O, P.

18. Tyre according to any one of Claims 1 to 17, **wherein** said tyre has a 3PMSF winter certification, that is to say "Three Peak Mountain Snowflake or "Trois Pics avec flocon de neige", said certification being indicated on a sidewall (10A, 30B) of the tire, attesting to its excellent performance on snowy ground and on wet ground.

FIG. 1

FIG. 2

FIG. 3

FIG. 4

FIG. 5

Coupe A-A

FIG. 6

FIG. 7

FIG. 8

FIG. 9

FIG. 10

FIG. 11

FIG. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016134988 A
- US D818939S S
- EP 0778311 A1
- WO 2011042507 A1
- WO 2009133068 A1
- WO 2015018743 A1
- WO 2015018774 A1
- WO 2015018772 A1
- WO 2015016888 A
- EP 2914946 A
- FR 2996640
- EP 0778311 A
- EP 2285852 A
- EP 2266819 A1